**Europäisches Patentamt**

(19) **European Patent Office**

**Office européen des brevets**

(11) Veröffentlichungsnummer: **0 016 397**
**B1**

(12) **EUROPÄISCHE PATENTSCHRIFT**

(45) Veröffentlichungstag der Patentschrift:
08.06.83

(21) Anmeldenummer: **80101220.4**

(22) Anmeldetag: **10.03.80**

(51) Int. Cl.³: **H 04 Q 3/47**, H 04 Q 3/68,
H 04 Q 11/04

(54) **Indirekt gesteuerte Vermittlungsanlage, insbesondere Fernsprechvermittlungsanlage.**

(30) Priorität: **15.03.79 DE 2910253**

(43) Veröffentlichungstag der Anmeldung:
**01.10.80 Patentblatt 80/20**

(45) Bekanntmachung des Hinweises auf die Patenterteilung:
**08.06.83 Patentblatt 83/23**

(84) Benannte Vertragsstaaten:
**AT CH FR GB IT NL SE**

(56) Entgegenhaltungen:
**DE-A-2 454 144**
**US-A-3 376 393**
**US-A-3 974 343**

**INTERNATIONAL CONFERENCE ON COMMUNICA-**
**TIONS, 12.–15.Juni 1977, Seiten 20,4.66–20,4.70 New**
**York, USA T.YAMAGUCHI et al.: «System Design on**
**Experimental Digital Telephone Switching System»**

(73) Patentinhaber: **SIEMENS AKTIENGESELLSCHAFT,**
**Berlin und München Wittelsbacherplatz 2,**
**D-8000 München 2 (DE)**

(72) Erfinder: **Sorgenfrei, Heiko, Dipl.-Ing.,**
**Ludwig-Thoma-Strasse 13, D-8029 Sauerlach (DE)**

Indirekt gesteuerte Vermittlungsanlage, insbesondere Fernsprechvermittlungsanlage

Die Erfindung betrifft eine Vermittlungsanlage der im Gattungsbegriff des Patentanspruches 1 beschriebenen Art.

Solche Vermittlungsanlagen sind beispielsweise durch die Literaturstelle «International Conference On Communications, 12.–15. Juni 1977, Seiten 20.4-66–20.4-70, New York, USA und die US-PS 3 974 343 bekannt».

Bei solchen bekannten Vermittlungsanlagen, bei denen die in ihrer Gesamtheit das Koppelfeld bildenden Teilkoppelfelder durch jeweils eigene Steuerwerke individuell steuerbar sind, ist es schwierig, eine Umrechnung von gewählten Rufnummern in die zugehörigen Anschlusslagen durchzuführen. Eine solche Umrechnung ist jedoch dann erforderlich, wenn eine freizügige Nummernvergabe vorgeschrieben ist. Der Erfindung liegt dementsprechend die Aufgabe zugrunde, eine Vermittlungsanlage der im Gattungsbegriff des Patentanspruches 1 beschriebenen Art so weiterzubilden, dass die erwähnte Rufnummernumrechnung ohne die Zuhilfenahme zentraler Einrichtungen möglich ist, in welche der Rufnummern- und Anschlusslagenplan der gesamten Anlage eingespeichert ist.

Diese Aufgabe wird durch eine Vermittlungsanlage mit den Merkmalen des Patentanspruches 1 gelöst.

Wenn von einer an ein Eingangsteilkoppelfeld angeschlossenen Quelle (z.B. einer Teilnehmerstelle) ein Verbindungswunsch ausgeht, wird erfindungsgemäss zunächst versucht, ob dieser Verbindungswunsch mit Hilfe des dem Eingangsteilkoppelfeld zugeordneten Steuerwerk allein befriedigt werden kann, ob also die gewählte Rufnummer einer Anschlusslage entspricht, die demselben Eingangsteilkoppelfeld angehört, an welche auch die Quelle angeschlossen ist. Erst wenn dies nicht der Fall ist, wird ein übergeordnetes Hilfsteilkoppelwerk in Anspruch genommen, dessen Steuerwerk den Verbindungswunsch an weitere Eingangsteilkoppelfelder weitergibt. Entspricht die gewählte Rufnummer auch keiner der diesen weiteren Eingangsteilkoppelfeldern angehörenden Anschlusslagen, so wird gemäss einer Weiterbildung der Erfindung ein den Hilfsteilkoppelfeldern übergeordnetes Zusatzteilkoppelfeld in Anspruch genommen, das die gewählte Rufnummer einer weiteren Vielzahl von Eingangsteilkoppelfeldern anbietet und die Verbindungsdurchschaltung zu demjenigen Eingangsteilkoppelfeld veranlasst, dem die der gewählten Rufnummer entsprechende Anschlusslage angehört.

Vorteilhafte Weiterbildungen und Ausgestaltungen der Erfindung sind Gegenstand der Unteransprüche, auf die hiermit zur Verkürzung der Beschreibung ausdrücklich verwiesen wird.

Bei der erfindungsgemäss gestalteten Vermittlungsanlage ist es vorteilhafterweise nicht erforderlich, einen zentralen Bus vorzusehen, über den die Steuerwerke Steuersignale austauschen. Letztere können nämlich über Verbindungswege ausgetauscht werden, die über Teilkoppelfelder durchschaltbar sind. Wenn die zu einer Rufnummer gehörende Anschlusslage geändert werden soll, so werden davon lediglich ein oder zwei Eingangsteilkoppelfelder und die zugehörigen Steuerwerke betroffen. Ändert sich die Anschlusslage innerhalb desselben Eingangsteilkoppelfeldes, so ist diese Änderung nur beim zugehörigen Steuerwerk zu berücksichtigen. Verändert sich die Ansclusslage bei einer Rufnummer von einem Eingangsteilkoppelfeld zu einem anderen Eingangsteilkoppelfeld, so sind nur die zugehörigen Steuerwerke betroffen. Bei Verbindungsanforderungen, welche einen Verbindungsweg zwischen zwei Eingängen ein und desselben Teilkoppelfeldes anfordern, wird lediglich ein zugehörendes Steuerwerk in Anspruch genommen. Dies entspricht den bei Umkehrgruppierungen möglichen Kurzwegen (siehe DE-PS 1 262 358). Nur diejenigen Verbindungswege, welche Eingänge zweier verschiedener Eingangsteilkoppelfelder verbinden, werden über ein Hilfsteilkoppelfeld geführt.

Die erfindungsgemässe Vermittlungsanlage hat noch weitere Vorteile. Das zugehörige Koppelfeld ist nämlich erweiterbar, so dass von wenigen Teilnehmeranschlüssen ausgehend, es derart ausgebaut werden kann, dass es auch sehr viele Teilnehmeranschlüsse hat. Dabei sind hierfür keine wesentlichen Vorleistungen zu erbringen, da die Teilkoppelfelder jeweils ihre eigenen Steuerwerke haben. Ferner ist im Zuge einer Erweiterung keine Eingriff in die bereits vorhandenen Teilkoppelfelder und zugehörigen Steuereinrichtungen erforderlich. Da keine zentralen Einrichtungen vorhanden sind, welche in jedem Fall in Anspruch zu nehmen sind, wie z.B. ein zentraler Signalbus, wird bei Ausfall einer Teileinrichtung die Arbeitsfähigkeit der übrigen Teileinrichtungen nicht beeinträchtigt. Wenn ein Eingangsteilkoppelfeld gestört ist, so sind lediglich die dort angeschlossenen Teilnehmeranschlüsse betroffen. Für die übrigen Teilnehmeranschlüsse können nach wie vor alle Verbindungen hergestellt werden. Die erfindungsgemässe Vermittlungsanlage ist daher weitgehend ausfallsicher. Diese Vermittlungsanlage ist vorteilhafterweise auch weitgehend gegen Überlastung gesichert. Selbst wenn beispielsweise von allen Teilnehmeranschlüssen ein und desselben Eingangsteilkoppelfeldes Verbindungen angefordert werden, so würde dies den Vermittlungsbetrieb für die übrigen Teilnehmeranschlüsse nicht blockieren. Es würden lediglich Verzögerungen im Vermittlungsbetrieb für das betroffene Eingangsteilkoppelfeld auftreten. Dieser Vorteil bleibt auch erhalten, wenn die Überlastung bei mehreren Eingangsteilkoppelfeldern auftritt.

Vorteilhafterweise können bei der erfindungsgemässen Vermittlungsanlage auch nachträglich Teilkoppelfelder samt Steuerwerken hinzugefügt werden, welche in vorher nicht verfügbarer Technologie aufgebaut sind. Sie können dann auch vorher nicht vorgesehene Betriebsmöglichkeiten zur Verfügung stellen. Dies kann auch dadurch geschehen, dass bereits vorher vorhandene Teilkoppelfelder samt Steuerwerke durch verbesserte Einrichtungen ausgetauscht werden. Dabei bleibt der Vorteil erhalten, dass bei den übrigen Teilkoppelfeldern samt Steuerwerken keine wesentlichen Änderungen erforderlich sind.

Die Teilkoppelfelder können jeweils so gross gewählt werden, dass sie noch sicher durch billige Kleinrechner gesteuert werden können. Wenn es sich um eine Vermittlungsanlage mit digitaler Nachrichtenübertragung handelt (siehe 1978 International Zurich Seminar on Digital Communications, Proceedings IEEE, Catalogue Nr. 78 CH 11325–0 ASST, Seiten B2.1–B2.5), so können die Teilkoppelfelder auch als elektronische Raumvielfachkoppler ausgebildet sein. Sie können auch jeweils durch einen Zeitkanalkoppler gebildet werden. Dann können auch die Zwischenleitungen, welche die verschiedenen Teilkoppelfelder verbinden, zeitmultiplexweise ausgenutzt werden. Es kann damit gerechnet werden, dass dann die zur Vermittlungsanlage gehörenden verschiedenen Einrichtungen aus hochintegrierten Chips aufzubauen sind und damit auch preisgünstig sind. Die Zahl der über das Koppelfeld führbaren Verbindungswege kann dann so reichlich bemessen werden, dass kaum mit gassenbesetzt zu rechnen ist. Wenn jedes Hilfsteilkoppelfeld und jedes Zusatzteilkoppelfeld zwei Steuerwerke hat, die einander vertreten können, so ergibt sich eine weitere Erhöhung der Ausfallsicherheit. Die jeweils zum selben Teilkoppelfeld gehörenden beiden Steuerwerke können auch im Lastteilungsbetrieb arbeiten, so dass sie voll zur Erhöhung der Verkehrsleistung ausgenutzt sind.

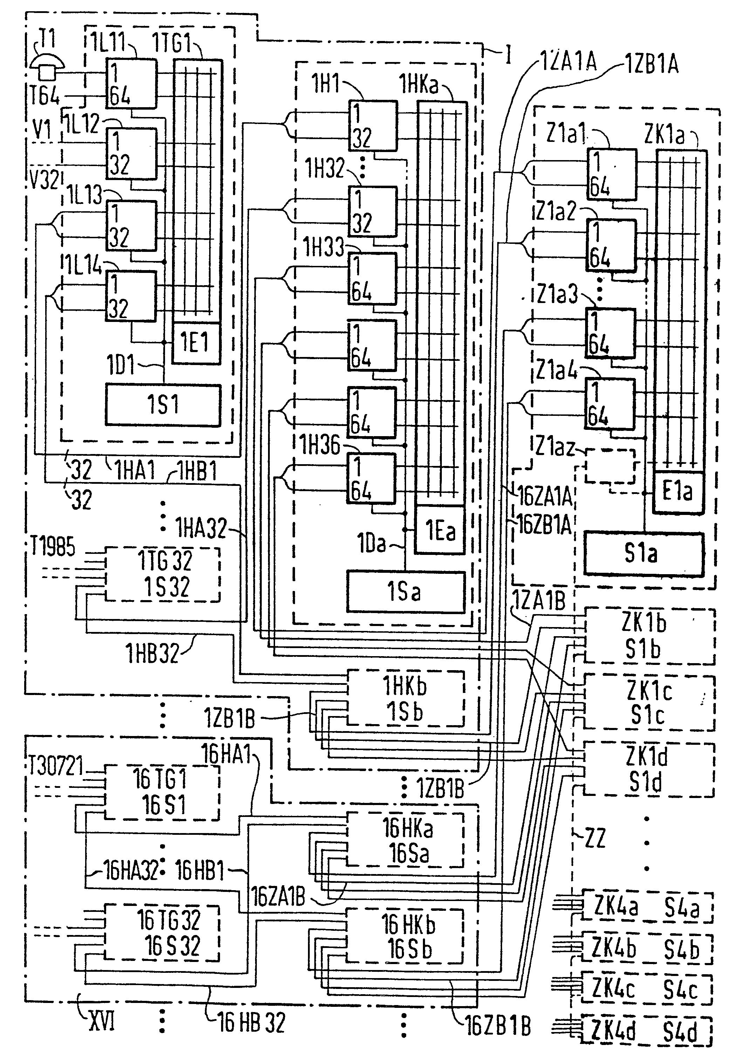

Der Externverkehr kann über Verbindungsleitungen geführt werden, die an Eingänge der Eingangsteilkoppelfelder angeschlossen sind. Im folgenden Werden nun Ausführungsbeispiele für die erfindungsgemässe Vermittlungsanlage anhand der Figur näher erläutert. Die Einzelheiten der Anlage sind hier nur soweit gezeigt, wie es für die Erfindung von Bedeutung ist, die sich in erster Linie auf die Gliederung des Koppelfeldes in Teilkoppelfelder samt zugehörigen Steuerwerken und auf die Herstellung von Verbindungswegen zwischen Eingängen von Eingangsteilkoppelfeldern auswirkt.

In der Figur sind zunächst die Eingangsteilkoppelfelder 1TG1...1TG32 gezeigt, welche die Steuerwerke 1S1...1S32 haben. Bei dem Eingangsteilkoppelfeld 1TG1 ist noch die Einstelleinrichtung 1E1 gezeigt, welche vom Steuerwerk 1S1 mit Einstellsignalen beliefert wird. Bei diesem Eingangsteilkoppelfeld sind die Teilnehmeranschlüsse T1...T64 vorgesehen, deren zugehörende 64 Teilnehmerschaltungen zur Mehrfachanschlussschaltung 1L11 zusammengefasst sind. Ausserdem sind dort noch die 32 Verbindungsleitungen V1...V32 vorgesehen, über welche der Externverkehr zu anderen Ämtern geleitet wird. Die zugehörigen Anschlussschaltungen sind zur Mehrfachanschlussschaltung 1L12 zusammengefasst. Bei dem Eingangsteilkoppelfeld 1TG32 sind ebenfalls solche Teilnehmeranschlüsse und Verbindungsleitungen vorgesehen. Zu diesen Teilnehmeranschlüssen gehört der Teilnehmeranschluss T1985. Über die beiden Hilfsteilkoppelfelder 1HKa und 1HKb werden die Verbindungswege geführt, über welche die Eingangsteilkoppelfelder 1TG1...1TF32 zusammenschaltbar sind. Diese beiden Hilfsteilkoppelfelder haben die Steuerwerke 1Sa und 1Sb. Beim Hilfsteilkoppelfeld 1HKa ist noch die Einstelleinrichtung 1Ea gezeigt. Die Verbindungswege zwischen dem Eingangsteilkoppelfeld 1TG1 und dem Hilfsteilkoppelfeld 1HKa sind über die 32 Zwischenleitungen 1HA1 geführt. Beim Eingangsteilkoppelfeld 1TG1 sind sie über die Mehrfachanschlussschaltung 1L13 und beim Hilfsteilkoppelfeld 1HKa über die Mehrfachanschlussschaltung 1H32 angeschlossen. Die Verbindungswege zwischen dem Eingangsteilkoppelfeld 1TG1 und dem Hilfsteilkoppelfeld 1KHb führen über die 32 Zwischenleitungen 1HB1. Diese sind beim Eingangsteilkoppelfeld 1TG1 über die Mehrfachanschlussschaltung 1L14 angeschlossen. Die Hilfsteilkoppelfelder 1HKa und 1HKb sind in entsprechender Weise mit den übrigen Eingangsteilkoppelfeldern über Zwischenleitungen verbunden. So sind sie mit dem Eingangsteilkoppelfeld 1TG32 über die Zwischenleitungen 1HA32 und 1HB32 verbunden. Die vorstehend beschriebenen Teilkoppelfelder 1TG1...1TG32 sowie 1HKa und 1HKb bilden zusammen samt zugehörenden individuellen Steuerwerken die Teilkoppelfeldgruppe I.

Wenn ein Verbindungsweg zwischen zwei Teilnehmeranschlüssen ein und desselben Eingangsteilkoppelfeldes herzustellen ist, so ist hierfür lediglich das zugehörige Steuerwerk samt Einstelleinrichtung in Anspruch zu nehmen. Ist z.B. ein Verbindungsweg zwischen dem Teilnehmeranschluss T1 und dem Teilnehmeranschluss T64 des Eingangsteilkoppelfeldes 1TG1 herzustellen, so wird durch das Steuerwerk 1S1 beispielsweise die über den Teilnehmeranschluss T1 und den Datenbus 101 gelieferte Rufnummer in die Anschlusslage des durch die Rufnummer bezeichneten Teilnehmeranschlusses T64 umgerechnet, worauf unter Mitwirkung der Einstelleinrichtung 1E1 der Verbindungsweg zwischen den Teilnehmeranschlüssen T1 und T64 über das Eingangsteilkoppelfeld 1TG1 zusammengeschaltet wird. Ein Verbindungsweg zwischen Teilnehmeranschlüssen verschiedener Eingangsteilkoppelfelder wird dagegen jeweils über ein einziges Hilfsteilkoppelfeld, z.B. über das Hilfsteilkoppelfeld 1HKa zusammengeschaltet. Wird beispielsweise über den Teilnehmeranschluss T1 eine Rufnummer geliefert, welche einen Verbindungsweg zum Teilnehmeranschluss T1985 beim Eingangsteilkoppelfeld 1TG32 anfordert, so ergibt sich bei einem Umrechnungsversuch mit Hilfe des Steuerwerks 1S1, dass hier die Anschlusslage dieses gewünschten Teilnehmeranschlusses T1985 nicht feststellbar ist, da die Umrechnung der in diesem Fall gewählten Runummer dort nicht durchführbar ist. Durch das Steuerwerk 1S1 des hier als Ursprungseingangsteilkoppelfeld wirkenden Teilkoppelfeldes 1TG1 wird dann ein Verbindungswegabschnitt zum Hilfsteilkoppelfeld 1HKa belegt, der über eine der Zwischenleitungen 1HA1 führt. Über diesen Verbindungswegabschnitt wird dann die gewählte Rufnummer über die Mehrfachschlussschaltung 1H1 und den Datenbus 1Da zum Steuerwerk 1Sa geschickt, das seinerseits diese Rufnummer zu den anderen Eingangsteilkoppelfeldern über das Hilfsteilkoppelfeld 1HKa weiterleitet. In diesem Fall wird das Steuerwerk 1S32 des Eingangsteilkoppelfeldes 1TG32, welches hier Zieleingangsteilkoppelfeld ist, die Umrechenbarkeit der gewählten Rufnummer zum Steuerwerk 1Sa melden, und zwar über eine der Zwischenleitungen 1HA32. Das Steuerwerk 1Sa belegt dann den über diese Zwischenleitung weiterführenden Verbindungswegabschnitt, womit der Verbindungsweg vom Ursprungseingangsteilkoppelfeld 1TG1 über das Hilfsteilkoppelfeld 1HKa bereits zum Zieleingangsteilkoppelfeld 1TG32 weitergeführt ist. Innerhalb des Hilfsteilkoppelfeldes 1HKa sind nämlich die gemäss vorstehender Beschreibung bereits belegten beiden Zwischenleitungen mit Hilfe des Steuerwerks 1Sa und der Einstelleinrichtung 1Ea zusammengeschaltet worden. Das Steuerwerk 1S32 schaltet dann den Verbindungsweg nach Umrechnung der gewählten Rufnummer in die Anschlusslage des damit bezeichneten Teilnehmeranschlusses T1985 über sein Eingangsteilkoppelfeld 1TG32 zu diesem angeforderten Teilnehmeranschluss T1985 durch. Offensichtlich können die dieser Weise Verbindungswege zwischen allen Teilnehmeranschlüssen der Eingangsteilkoppelfelder 1TG1...1TG32 hergestellt werden, wobei sie über einander Hilfsteilkoppelfelder 1HKa und 1HKb geführt werden. Es können hier zwischen zwei Teilkoppelfeldern jeweils mehrere Verbindungswege durchgeschaltet werden. Ausserdem können sich auch die beiden Hilfsteilkoppelfelder 1HKa und 1HKb vertreten. Gassenbesetzt kann daher weitgehend vermieden werden, insbesondere dann, wenn die Teilkoppelfelder beispielsweise als vollkommene Bündel ausgebildet sind. Die beiden beschriebenen Beispiele für Verbindungswege bestätigen, dass selbsttätig jeweils der kürzeste mögliche Verbindungsweg zwischen den zu verbindenden Teilnehmeranschlüssen gefunden wird.

Das in der Figur gezeigte Koppelfeld hat nun nicht nur die Teilkoppelfeldgruppe I sondern auch weitere solche Teilkoppelfeldgruppen, von denen die letzte die Teilkoppelfeldgruppe XVI ist. Zur Teilkoppelfeldgruppe XVI gehören die Eingangsteilkoppelfelder 16TG1...16TG32 mit den zugehörenden Steuerwerken 16S1...16S32 sowie die Hilfsteilkoppelfelder 16HKa und 16HKb mit den Steuerwerken 16Sa und 16Sb. Die zur Teilkoppelfeldgruppe XVI gehörenden Teilkoppelfelder sind über die Zwischenleitungen 16HA1...16HA32 sowie 16HB1...16HB32 verbunden. Die Teilkoppelfeldgruppen I...XVI sind ihrerseits über die Zusatzteilkoppelfelder ZK1a, ZK1b, ZK1c verbunden, und zwar entsprechend wie die Eingangsteilkoppelfelder jeweils über Hilfsteilkoppelfelder verbunden sind, nämlich jeweils über Zwischenleitungen. Dazu gehören die Zwischenleitungen 1ZA1A, 1ZB1A, 16ZA1A, 16ZB1A sowie 1ZA1B, 1ZB1B und 16ZB1B. So ist z. B. das Hilfsteilkoppelfeld 1HKa über die 64 Zwischenleitungen 1ZA1A mit dem Zusatzteilkoppelfeld ZK1a verbunden. Diese Zwischenleitungen sind über die Mehrfachanschlussschaltungen 1H1 und Z1a1 geführt. Bei dem Zusatzteilkoppelfeld ZK1a sind noch die weiteren Mehrfachanschlussschaltungen Z1a2, Z1a3, Z1a4 vorhanden, zu denen die bereits erwähnten Zwischenleitungen 1ZB1A, 16ZA1A und 16ZB1A führen. In entsprechender Weise sind bei den Zusatzteilkoppelfeldern ZK1b, ZK1c und ZK1d unter anderem die Zwischenleitungen 1ZA1b, 1ZB1B und 16ZB1B angeschlossen. Bei Verbindungsanforderungen, bei denen das Ursprungseingangsteilkoppelfeld und das Zieleingangsteilkoppelfeld zu verschiedenen Teilkoppelfeldgruppen gehören, wird dann der Verbindungsweg jeweils über eines der Zusatzteilkoppelfelder ZK1a...ZK1d geführt. Dies wird hier jeweils dadurch gelöst, dass kein Eingangsteilkoppelfeld der Teilkoppelfeldgruppe mit dem Ursprungseingangsteilkoppelfeld die Umrechenbarkeit der gewählten Rufnummer meldet.

Ist z. B. ein Verbindungsweg zwischen dem Teilnehmeranschluss T1 beim Eingangsteilkoppelfeld 1TG1 und dem Teilnehmeranschluss T30721 beim Eingangsteilkoppelfeld 16TG1 aufgrund der beim Teilnehmeranschluss T1 gewählten Rufnummer herzustellen, so spielen sich folgende Vorgänge ab. Zunächst wird durch das Steuerwerk 1S1 des Ursprungseingangsteilkoppelfeldes 1TG1 die Nichtumrechenbarkeit der gewählten Rufnummer festgestellt. Daraufhin wird in der bereits beschriebenen Weise ein Verbindungswegabschnitt zu einem Hilfsteilkoppelfeld, beispielsweise zum Hilfsteilkoppelfeld 1HKa belegt. Das zugehörige Steuerwerk 1Sa stellt dann fest, dass auch keines der übrigen Steuerwerke der Eingangsteilkoppelfelder der Teilkoppelfeldgruppe I die Umrechenbarkeit der gewählten Rufnummer meldet. Hierzu werden jeweils vorübergehend Verbindungswegabschnitte belegt, die zu Zwischenleitungen gehören, welche zu diesen Eingangsteilkoppelfeldern führen. Das Steuerwerk 1Sa leitet dann die gewählte Rufnummer zu einem Steuerwerk eines Zusatzteilkoppelfeldes weiter, beispielsweise zum Steuerwerk S1a des Zusatzteilkoppelfeldes ZK1a, und zwar über eine der Zwischenleitungen 1ZA1A. Dieses Steuerwerk S1a leitet dann diese Rufnummer ebenfalls weiter und zwar beispielsweise über eine der Zwischenleitungen 16ZBA zum Zilfsteilkoppelfeld 16HKb mit dem Steuerwerk 16Sb. In der bereits beschriebenen Technik für die Herstellung von Verbindungswegen in ein und derselben Teilkoppelfeldgruppe wird dann der Verbindungsweg von dort mit Hilfe der gewählten Rufnummer zum Zieleingangsteilkoppelfeld 16TG1 über eine der Zwischenleitungen 16HA32 weitergeleitet, welches den Teilnehmeranschluss T30721 hat. Dessen Steuerwerk 16S1 hat nämlich die Umrechenbarkeit der gewählten Rufnummer gemeldet und schaltet dann nach Umrechnung den Verbindungsweg zum angeforderten Teilnehmeranschluss T30721 über sein Eingangsteilkoppelfeld 16TG1 durch. In entsprechender Weise wird der Verbindungsweg über das Zusatzteilkoppelfeld 16HKb durch das zugehörige Steuerwerk 16Sb durchgeschaltet, ferner wird er mit Hilfe des Steuerwerks S1a und der Einstelleinrichtung E1a beim Zusatzteilkoppelfeld ZK1a durchgeschaltet. Die Steuerwerke 1S1 und 1Sa haben bereits vorher beim Ursprungseingangsteilkoppelfeld 1TG1 und beim Hilfsteilkoppelfeld 1HKa den Verbindungsweg durchgeschaltet.

Der Verbindungsweg vom Teilnehmeranschluss T1 führt also über die Mehrfachanschlussschaltung 1L11, das Ursprungseingangsteilkoppelfeld 1TG1, eine der Zwischenleitungen 1HA1 zur Mehrfachanschlussschaltung 1H1 und zum Hilfsteilkoppelfeld 1HKa. Von dort führt er weiter über die Mehrfachanschlussschaltung 1H33 und eine der Zwischenleitungen 1ZA1A zur Mehrfachanschlussschaltung Z1a1 zum Zusatzteilkoppelfeld ZK1a. Von dort ist er über die Mehrfachanschlussschaltung Z1a4, eine der Zwischenleitungen 16ZB1A, das Hilfsteilkoppelfeld 16HKb, eine der Zwischenleitungen 16HA32 und das Zieleingangsteilkoppelfeld 16TG1 zum Zielteilnehmeranschluss T30721 weitergeführt.

Da hier eine grössere Anzahl von Teilkoppelfeldgruppen vorhanden sind, ist vom Zusatzteilkoppelfeld ZK1a mit Hilfe des zugehörigen Steuerwerks S1a in der Regel bei mehreren und unter Umständen sogar bei allen Teilkoppelfeldgruppen ausser bei der Teilkoppelfeldgruppe mit dem Ursprungseingangsteilkoppelfeld mit Hilfe der gewählten Rufnummer das Zieleingangsteilkoppelfeld festzustellen, welches die Umrechenbarkeit dieser Rufnummer meldet, damit dorthin der Verbindungsweg entsprechend der bereits beschriebenen Weise hergestellt werden kann. Hierbei sind also vorübergehend jeweils über verschiedene Zwischenleitungen führende Verbindungswegabschnitte zu belegen. Diese vorübergehenden Belegungen nehmen jedoch im Vergleich zu Belegungen für Sprechverbindungen nur jeweils kurze Zeitspannen in Anspruch. Die Herstellung von Verbindungswegen für solche Sprechverbindungen wird daher hierdurch nur geringfügig beeinträchtigt. Dagegen ist die Belastung von Steuereinrichtungen vergleichsweise grösser. Es kann auch vorgesehen sein, dass die Steuerwerke Steuersignale über Verbindungswege austauschen, die fest durchgeschaltet über Teilkoppelfelder führen. Eine Blockierung des Verbindungsaufbaues kann auch dadurch vermieden werden, dass bei der Weiterleitung gewählter Rufnummern vom jeweiligen Teilkoppelfeld aus unter den in Richtung zum Zieleingangsteilkoppelfeld weiterführenden Verbindungsabschnitten gewechselt wird, um ein anderes Hilfsteilkoppelfeld bzw. Zusatzteilkoppelfeld zu erreichen, wenn das beim vorher erreichten Teilkoppelfeld arbeitende Steuerwerk sich als durch Vermittlungsvorgänge überlastet meldet. Dadurch wird also die Weitergabe von Rufnummern durch ein überlastetes Steuerwerk abgewehrt. Diese Abwehr kann auch bereits vor einer Überlastung vorsorglich einsetzen, um das Steuerwerk für die Abwicklung anderer Vermittlungsvorgänge, beispielsweise für das Auftrennen von Vermittlungsvorgänge, beispielsweise für das Auftrennen von Verbindungswegen freizuhalten. Obwohl hier für die Herstellung von Verbindungswegen unter Umständen mehrere Steuerwerke in Anspruch zu nehmen sind, kann dadurch vermieden werden, dass andere Vermittlungsvorgänge in unzulässiger Weise blockiert werden. Falls erforderlich, können hierzu noch weitere Massnahmen vorgesehen werden, beispielsweise eine vorübergehende Einschränkung derjenigen Betriebsmöglichkeiten, die für die Herstellung bzw. bei der Auftrennung von Verbindungswegen mehr als die Mindestzahl von Steuervorgängen oder die Steuervorgänge für darüber hinausgehende Aufträge für Teilnehmeranschlüsse erfordern (siehe beispielsweise DE-PS 1 940 502).

Auch die zuletzt beschriebenen Betriebsbeispiele bestätigen, dass in einheitlicher Steuerungstechnik Verbindungswege hergestellt werden können, die Teilnehmeranschlüsse ein und desselben Eingangsteilkoppelfeldes, Teilnehmeranschlüsse verschiedener Eingangsteilkoppelfelder ein und derselben Teilkoppelfeldgruppe und Teilnehmeranschlüsse von Eingangsteilkoppelfeldern verschiedener Teilkoppelfeldgruppen verbinden. Dabei wird selbsttätig auch jeweils der kürzeste Verbindungsweg zwischen solchen Teilnehmeranschlüssen hergestellt. Vorteilhafterweise führen bei all diesen verschiedenen Betriebsbeispielen die Steuerwerke jeweils einander entsprechende Vorgänge aus. Sie können daher auch jeweils weitgehend übereinstimmend aufgebaut sein. Änderung von Anschlusslagen haben lediglich Änderung bei den Steuerwerken zur Folge, welche zu den betroffenen Eingangsteilkoppelfeldern gehören. Die übrigen Steuerwerke bleiben davon unberührt. Die Vermittlungsanlage gemäss der Erfindung hat daher eine Struktur, die ermöglicht, dass sie baukastenartig aus untereinander weitgehend gleichen Teileinrichtungen aufgebaut wird. Dies gilt auch für Erweiterungen der Vermittlungsanlage.

Eine derartige Erweiterung ist auch in der Figur angedeutet. Dort sind nämlich ausser den Zusatzteilkoppelfeldern, ZK1a, ZK1b, ZK1c und ZK1d samt zugehöriger Steuerwerke S1a, S1b, S1c und S1d noch weitere Zusatzteilkoppelfelder gezeigt, wie die Zusatzteilkoppelfelder ZK4a, ZK4b, ZK4c und ZK4d samt zugehöriger Steuerwerke S4a, S4b, S4c und S4d. Diese weiteren Zusatzteilkoppelfelder sind mit den Zusatzteilkoppelfeldern der Teilkoppelfeldgruppen I...XVI über die Zwischenleistungen ZZ verbunden, welche in der Figur allerdings lediglich schematisch angedeutet sind. Die Zusatzteilkoppelfelder ZK4a...ZK4d und die entsprechenden weiteren Zusatzteilkoppelfelder sind ihrerseits mit eigenen, in der Figur nichtgezeigten Teilkoppelfeldgruppen verbunden. Unter Ausnutzung der Zwischenleitungen ZZ können dann auch Verbindungswege zwischen Teilnehmeranschlüssen aller dieser Teilkoppelfeldgruppen hergestellt werden. Die Zwischenleitung zwischen den Zusatzteilkoppelfeldern verschiedener Teilkoppelfeldgruppen können auch maschenförmig geführt werden. In der Figur ist angedeutet, dass sie bei den Zusatzteilkoppelfeldern entsprechend wie die anderen Zwischenleitungen angeschlossen sind, welche zu den Hilfsteilkoppelfeldern führen. So sind beispielsweise beim Zusatzteilkoppelfeld ZK1a zu anderen Zusatzteilkoppelfeldern führende Zwischenleitungen über den Mehrfachanschluss Z1az angeschlossen. Das in der Figur gezeigte Koppelfeld kann sinngemäss durch weitere Teilkoppelfelder erweitert werden, ohne dass dabei Änderungen bei der Betriebsweise der zu den Teilkoppelfeldern gehörenden Steuerwerke erforderlich sind. Zweckmässigerweise werden auch die Zwischenleitungen ZZ derart angeordnet, dass zwischen zwei die Zusatzteilkoppelfelder jeweils mehrere Verbindungswege durchschaltbar sind.

Wie bereits angedeutet, sind die Teilnehmeranschlüsse T1...T64...T1985...T30721 bei dem in der Figur gezeigten Ausführungsbeispiel an das Koppelfeld gemäss Umkehrgruppierung (siehe NTZ, 1969, Heft 10, Seiten 588–596) angeschlossen. Die Verbindungswege kehren daher innerhalb oder am Rande des Koppelfeldes um, wobei sie von einem Teilnehmeranschluss ausgehen und zu einem anderen Teilnehmeranschluss zurückführen. Zweckmässigerweise werden auch die Verbindungssätze und weitere pro Verbindung erforderliche Schaltglieder in gleicher Weise wie die Teilnehmeranschlüsse an die Eingänge von Eingangsteilkoppelfeldern angeschlossen (siehe DE-PS 1 235 297). Dadurch ergibt sich eine weitgehende Vereinheitlichung der Durchschaltevorgänge bei den Eingangsteilkoppelfeldern. Diese Vereinheitlichung wird noch verbessert, wenn die die Teilkoppelfelder verbindenden Zwischenleitungen bei jedem Teilkoppelfeld nur an zugehörige Eingänge gemäss Umkehrgruppierung bezüglich des Teilkoppelfeldes selber angeschlossen sind. Die Verbindungswege kehren in diesem Fall auch innerhalb der Teilkoppelfelder um, über die sie geführt sind. Eine derartige Umkehr ist auch bei den bereits beschriebenen Verbindungswegen in jedem betroffen Teilkoppelfeld vorhanden, welche die Teilnehmeranschlüsse T1 und T64 bzw. T1 und T1985 bzw. T1 und T30721 verbinden. Diese Gruppierungsmassnahmen haben zur Folge, dass bei der Herstellung von Verbindungswegen bei jedem betroffenen Teilkoppelfeld jeweils eine Durchschaltung zwischen zwei Eingängen vorzunehmen ist. In diesem Zusammenhang hat die Arbeitsweise aller Steuerwerke übereinzustimmen. Dies ist sehr vorteilhaft für den baukastenartigen Aufbau der Vermittlungsanlage.

Entsprechende Vorteile gelten auch für die Auftrennung von Verbindungswegen. So kann ein Verbindungsweg z.B. jeweils mit Hilfe eines vom Steuerwerk eines Eingangsteilkoppelfeldes gelieferten Steuersignals aufgetrennt werden, das von den Steuerwerken der übrigen am Verbindungsweg beteiligten Teilkoppelfelder empfangen und dort zur Auftrennung im zugehörigen Teilkoppelfeld ausgenutzt wird.

Wie bereits erwähnt, sind an die Eingänge der Eingangsteilkoppelfelder auch Verbindungsleitungen für Externverkehr angeschlossen, wie beim Eingangsteilkoppelfeld 1TG1 die Verbindungsleitungen V1...V32 über den Mehrfachanschluss 1L12. Zweckmässigerweise wird bei jedem Eingangsteilkoppelfeld mindestens eine Verbindungsleitung für jede externe Richtung angeschlossen. Es können dann Verbindungsanforderungen für externen Verkehr bei Freisein einer in die betreffende externe Richtung führenden Verbindungsleitung bereits alleine über das Eingangsteilkoppelfeld weitergeführt werden, bei dem der diesen Verbindungsweg anfordernde Teilnehmeranschluss angeschlossen ist. Die Anschlusslage einer infrage kommenden Verbindungsleitung ergibt sich bei der Umwertung der vom anfordernden Teilnehmeranschluss gelieferten Rufnummer. Ist keine in die angeforderte externe Richtung hinführende Verbindungsleitung frei, so kann die gewählte Rufnummer zu einem Hilfsteilkoppelfeld weitergeleitet werden, das diese Rufnummer dann ihrerseits zu den übrigen Eingangsteilkoppelfeldern weiterleitet, bis im Zuge der durch die zugehörigen Steuerwerke durchgeführten Umwertung dieser Rufnummer eine freie Verbindungsleitung gemeldet wird, welche in die angeforderte externe Richtung weiterführt. Der Vermittlungsbetrieb für Externverkehr wird also ganz entsprechend wie der Vermittlungsbetrieb für Internverkehr abgewickelt. Bei Bedarf kann er auch über Zusatzteilkoppelfelder geführt werden. Dadurch ergibt sich eine sehr gute Ausnutzung der in externe Richtungen führenden Verbindungsleitungen. Wenn Änderungen bei der Anschlussweise von solchen Verbindungsleitungen an einem Eingangsteilkoppelfeld vorgenommen werden, so wird dadurch lediglich die Umrechnung bei diesem Eingangsteilkoppelfeld selber betroffen. Es sind daher in diesem Zusammenhang keine Eingriffe bei den Steuerwerken anderer Eingangsteilkoppelfelder oder sonstiger anderer Teilkoppelfelder erforderlich.

Eine Ermittlungsanlage, die gemäss der erfindungsgemässen Technik aufgebaut ist, kann auch mit übergeordneten digitalen selbständigen Rechenanlagen verbunden sein, durch die Betriebsvorgänge für die Bedienung und Wartung und andere Betriebsvorgänge abgewickelt werden können (siehe DE-PS 2 139 275). Eine derartige Rechenanlage kann auch zur Überwachung der Betriebsfähigkeit der verschiedenen Steuerwerke mit ausgenutzt werden und die Ersatzschaltung kontrollieren.

**Patentansprüche**

1. Indirekt gesteuerte Vermittlungsanlage, insbesondere Fernsprechvermittlungsanlage,

– mit einem Koppelfeld, das zumindest folgende Arten von Teilkoppelfeldern beinhaltet, die jeweils mit eigenen Steuerwerken ausgestattet und dementsprechend individuell gesteuert sind:

– Eingangskoppelfelder (z.B. 1TG1), an welche Teilnehmeranschlüsse (T1...T64) und/oder Verbindungsleitungen in vorgegebenen Anschlusslagen angeschlossen sind,

– Hilfsteilkoppelfelder (z.B. 1HKa), an welche eine Mehrzahl von Eingangsteilkoppelfeldern angeschlossen ist und über welche letztere miteinander verbindbar sind,

– sowie mit Einrichtungen zur Umrechnung einer gewählten Rufnummer in die entsprechende Anschlusslage an einem Eingangsteilkoppelfeld, dadurch gekennzeichnet,

– dass die Einstelleinrichtung (z.B. 1E1) jedes Eingangsteilkoppelfeldes (z.B. 1TG1) Mittel zur Umrechnung derjenigen Rufnummern beinhaltet, welche den Anschlusslagen der an dieses Eingangsteilkoppelfeld (1TG1) angeschlossenen Teilnehmeranschlüsse (T1...T64) entsprechen, derart, dass Verbindungen, deren Ursprung (z.B. T1) und deren Zeil (z.B. T64) an ein und dasselbe Eingangsteilkoppelfeld (1TG1) angeschlossen sind, durch das Steuerwerk (1S1) dieses Eingangsteilkoppelfeldes (1TG1) selbständig aufgebaut werden, während die übrigen Rufnummern an das Steuerwerk (z.B. 1Sa) eines übergeordneten Hilfsteilkoppelfeldes (z.B. 1HKa) mitgeteilt werden,

– dass das Steuerwerk (z.B. 1Sa) eines jeden Hilfsteilkoppelfeldes (z.B. 1HKa) Mittel beinhaltet, durch die Rufnummern, die ihr von einem der an das Hilfteilkoppelfeld (1HKa) angeschlossenen Eingangsteilkoppelfelder (z.B. 1TG1) mitgeteilt werden, an alle übrigen mit diesem Hilfsteilkoppelfeld (1HKa) verbundenen Eingangsteilkoppelfelder (z.B. 1TG32) weitergeleitet werden, wobei die Übertragung der Rufnummer von dem betroffenen Eingangskoppelfeld (z.B. TG1) zu dem Hilfsteilkoppelfeld (1HKa) über einen von dem Steuerwerk (1S1) des ersteren belegten zu dem Hilfsteilkoppelfeld (1HKa) führenden Verbindungswegabschnitt erfolgt

– und dass das Steuerwerk (1Sa) des Hilfsteilkoppelfeldes (1HKa) eine über letzteres (1HKa) verlaufende Verbindungsdurchschaltung veranlasst, die zu demjenigen Eingangsteilkoppelfeld (z.B. 1TG32) führt, dessen Steuerwerk (1S32) die Umrechenbarkeit der in Frage stehenden Rufnummer signalisiert hat.

2. Vermittlungsanlage nach Anspruch 1, bei der zusammengehörige Hilfsteilkoppelfelder und die ihnen zugeordneten Eingangsteilkoppelfelder eine Teilkoppelfeldgruppe bilden und eine Mehrzahl derartiger Teilkoppelfeldgruppen vorgesehen sind, dadurch gekennzeichnet,

– dass die Hilfskoppelfelder (1HKa bis 16HKb) sämtlicher Teilkoppelfeldgruppen (I–XVI) über eine Mehrzahl von Zusatzteilkoppelfeldern (ZK1a–ZK4d), 25 die jeweils eigene Steuerwerke (S1a–S4d) besitzen, miteinander verbindbar sind, dass von einer an ein Eingangsteilkoppelfeld (1TG1) angeschlossenen Quelle (z.B. T1) gewählte Rufnummern, deren zugehörige Anschlusslage weder diesem Eingangsteilkoppelfeld (1TG1) noch einem anderen Eingangsteilkoppelfeld der betreffenden Teilkoppelfeldgruppe (I) angehört, über einen vorbereitend belegten Verbindungswegabschnitt zu einem Zusatzteilkoppelfeld (z.B. ZK1a) übertragen werden,

– dass das Steuerwerk (S1a) dieses Zusatzteilkoppelfeldes (ZK1a) die in Frage stehende Rufnummer über die Hilfsteilkoppelfelder der anderen Teilkoppelfeldgruppen (...XVI) zu deren Eingangsteilkoppelfeldern (...16TG1...16TG32) weiterleitet und die Durchschaltung einer über das Zusatzteilkoppelfeld (ZK1a) verlaufenden Verbindung veranlasst, die zu demjenigen Eingangsteilkoppelfeld (z.B. 16TG1) führt, welches die der gewählten Rufnummer entsprechende Anschlusslage aufweist und deren Steuerwerk (16S1) dementsprechend die Umrechenbarkeit der gewählten Rufnummer signalisiert.

3. Vermittlungsanlage nach Anspruch 2, dadurch gekennzeichnet, dass die Zusatzteilkoppelfelder (ZK1a–ZK1d) der genannten Teilkoppelfeldgruppen (I–XVI) mit weiteren Zusatzkoppelfeldern (...ZK4a...ZK4d) in Verbindung stehen, die mit weiteren Teilkoppelfeldgruppen verbunden sind und dass Rufnummern, die keiner der Anschlusslagen der erstgenannten Teilkoppelfeldgruppen (I–XVI) entsprechen, über die genannten weiteren Zusatzteilkoppelfelder (...ZK4a...ZKad) den Eingangsteilkoppelfeldern der mit diesen verbundenen Teilkoppelfeldgruppen angeboten werden.

4. Vermittlungsanlage nach einem der vorhergehenden Ansprüche, dadurch gekennzeichnet, dass die Teilnehmeranschlüsse (T1...T64...T1985) an das Koppelfeld gemäss Umkehrgruppierung angeschlossen sind.

5. Vermittlungsanlage nach Anspruch 4, dadurch gekennzeichnet, dass die Teilnehmeranschlüsse, die Verbindungssätze und weitere pro Verbindung erforderliche Schaltglieder in gleicher Weise an die Eingänge von Eingangsteilkoppelfeldern angeschlossen sind.

6. Vermittlungsanlage nach Anspruch 5, dadurch gekennzeichnet, dass die die Teilkoppelfelder verbindenden Zwischenleitungen bei jedem Teilkoppelfeld nur an zugehörige Eingänge gemäss Umkehrgruppierung bezüglich des Teilkoppelfeldes angeschlossen sind und die Verbindungswege daher auch innerhalb der Teilkoppelfelder umkehren.

7. Vermittlungsanlage nach einem der Ansprüche 4 bis 6, dadurch gekennzeichnet, dass zwischen zwei Teilkoppelfelder jeweils mehrere Verbindungswege durchschaltbar sind.

8. Vermittlungsanlage nach einem der Ansprüche 4 bis 7, dadurch gekennzeichnet, dass ein Teilkoppelfeld jeweils durch einen Raumvielfachkoppler gebildet ist.

9. Vermittlungsanlage nach einem der Ansprüche 4 bis 7, dadurch gekennzeichnet, dass ein Teilkoppelfeld jeweils durch einen Zeitkanalkoppler gebildet ist.

10. Vermittlungsanlage nach einem der Ansprüche 4 bis 9, dadurch gekennzeichnet, dass die Verbindungsleitungen (V1...V32) für Externverkehr an Eingänge der Eingangsteilkoppelfelder (1TG1...1TG32) angeschlossen sind.

11. Vermittlungsanlage nach Anspruch 10, dadurch gekennzeichnet, dass bei jedem Eingangsteilkoppelfeld mindestens eine Verbindungsleitung für jede externe Richtung angeschlossen ist.

12. Vermittlungsanlage nach einem der vorhergehenden Ansprüche, dadurch gekennzeichnet, dass jedes Hilfsteilkoppelfeld (1HKa...16HKb) und jedes Zusatzteilkoppelfeld (TZK1a...ZK4d) zwei Steuerwerke hat, die einander vertreten können.

13. Vermittlungsanlage nach einem der vorhergehenden Ansprüche, dadurch gekennzeichnet, dass bei der Weiterleitung gewählter Rufnummern vom jeweiligen Teilkoppelfeld aus unter den in Richtung zum Zieleingangsteilkoppelfeld weiterführenden Verbindungsabschnitten gewechselt wird, um ein anderes Hilfsteilkoppelfeld bzw. Zusatzteilkoppelfeld zu erreichen, wenn das beim vorher erreichten Teilkoppelfeld arbeitende Steuerwerk sich als durch Vermittlungsvorgänge überlastet meldet.

14. Vermittlungsanlage nach einem der vorhergehenden Ansprüche, dadurch gekennzeichnet, dass ein Verbindungsweg jeweils mit Hilfe eines vom Steuerwerk eines Eingangsteilkoppelfeldes gelieferten Steuersignals aufgetrennt wird, das von den Steuerwerken der übrigen am Verbindungsweg beteiligten Teilkoppelfelder empfangen und dort zum Auftrennung ausgenutzt wird.

15. Vermittlungsanlage nach einem der vorhergehenden Ansprüche, dadurch gekennzeichnet, dass die Steuerwerke Steuersignale über Verbindungswege austauschen, die fest durchgeschaltet über Teilkoppelfelder führen.

## Claims

1. Indirectly controlled exchange system, in particular a telephone exchange system,
   – comprising a switching network which contains at least the following types of subsidiary switching networks, each of which is equipped with individual control units and accordingly is individually controlled:
   – input switching networks (e.g. 1TG1) which are connected to subscriber terminals (T1...T64) and/or connection lines in given connection states,
   – auxiliary subsidiary switching networks (e.g. 1HKa) which are connected to a plurality of input subsidiary switching networks and via which the latter may be connected to one another,
   – and comprising devices which serve to convert a selected subscriber number into the corresponding connection state in an input subsidiary switching network, characterised in that
   – the setting-up device (e.g. 1E1) of each input subsidiary switching network (e.g. 1TG1) contains means for the conversion of those subscriber numbers which correspond to the connection states of the subscriber terminals (T1...T64) which are connected to this input subsidiary switching network (1TG1), in such manner that connections whose origin (e. g. T1) and whose target (e.g. T64) are connected to one and the same input subsidiary switching network (1TG1) are automatically established by the control unit (1S1) of this input subsidiary switching network (1TG1), whereas the other subsidiary numbers are communicated to the control unit (e.g. 1Sa) of a superordinate auxiliary subsidiary switching network (e.g. 1HKa),
   – that the control unit (e.g. 1Sa) of each auxiliary subsidiary switching network (e.g. 1HKa) contains means by which subscriber numbers with which they have been supplied by one of the input subsidiary switching networks (e.g. 1TG1) connected to the auxiliary subsidiary switching network (1HKa), are forwarded to all the other input subsidiary switching networks (e.g. 1TG32) connected to this auxiliary subsidiary switching network (1HKa), where the transmission of the subscriber numbers from the input switching network (e.g. TG1) in question to the auxiliary subsidiary switching network (1HKa) takes place via a connection path section leading from the control unit (1S1) of the former switching network to the auxiliary subsidiary switching network (1HKa) and that the control unit (1Sa) of this auxiliary subsidiary switching network (1HKa) brings about a connection switch-through which takes place via the latter switching network (1HKa) and which leads to the input subsidiary switching network (e.g. 1TG32) whose control unit (1S32) has signalled the convertibility of the subscriber number in question.

2. Exchange system as claimed in claim 1 wherein associated auxiliary subsidiary switching networks and the input subsidiary switching networks assigned thereto form a subsidiary switching network group and a plurality of such subsidiary switching network groups are provided, characterised in that
   – the auxiliary switching networks (1HKa to 16HKb) of all the subsidiary switching network groups (I to XVI) can be connected to one another via a plurality of additional subsidiary switching networks (ZK1a to ZK4d) 25 each of which possesses its own control unit (S1a to S4d), that subscriber numbers which have been selected by a source (e.g. T1) connected to an input subsidiary switching network (1TG1) and whose associated connection state belongs neither to this input subsidiary switching network (1TG1) nor to another input subsidiary switching network ot the subsidiary switching network group (I) in question are transmitted via a temporarily seized connection path section to an additional subsidiary switching network (e.g. ZK1a),
   – that the control unit (S1a) of this additional subsidiary switching network (ZK1a) forwards the subscriber number in question via the auxiliary subsidiary switching networks of the other subsidiary switching network groups (...XVI) to their input subsidiary switching networks (...16TG1...16TG32), and brings about the switch-through of a connection which runs via the additional subsidiary switching network (ZK1a) and which leads to that input subsidiary switching network (e.g. 16TG1) which possesses the connection state corresponding to the selected subscriber number and whose control unit (1gS1) accordingly signals the convertibility of the selected subscriber number.

3. Exchange system as claimed in claim 2, characterised in that the additional subsidiary switching networks (ZK1a to ZK1d) of the aforementioned subsidiary switching network groups (I to XVI) are connected to further additional switching networks (...ZK4a...ZK4d) which are connected to further subsidiary switching network groups, and that subscriber numbers which do not correspond to any of the connection states of the first mentioned subsidiary switching network groups (I to XVI) are presented via the aforesaid further additional subsidiary switching networks (...ZK4a...ZKad) to the input subsidiary switching networks of the subsidiary switching network groups connected thereto.

4. Exchange system as claimed in one of the preceding claims, characterised in that the subscriber terminals (T1...T64...T1985) are connected to the switching network in accordance with the reverse grouping principle.

5. Exchange system as claimed in claim 4, characterised in that the subscriber terminals, the connection sets, and further logic elements required in respect of every connection are connected in an identical manner to the inputs of input subsidiary switching networks.

6. Exchange system as claimed in claim 5, characterised in that in each subsidiary switching network the intermediate lines which connect the subsidiary switching networks are connected only to associated inputs in accordance with the reverse grouping principle in respect of the subsidiary switching network and therefore the connection paths also reverse within the subsidiary switching networks.

7. Exchange system as claimed in one of the claims 4 to 6, characterised in that in each case a plurality of connection paths can be switched between two subsidiary switching networks.

8. Exchange system as claimed in one of the claims 4 to 7, characterised in that each subsidiary switching network is formed by a space division multiplexing coupler.

9. Exchange system as claimed in one of the claims 4 to 7, characterised in that each subsidiary switching network is formed by a time channel coupler.

10. Exchange system as claimed in one of the claims 4 to 9, characterised in that the connection lines (V1...V32) for external traffic are connected to inputs of the input subsidiary switching networks (1TG1...1TG32).

11. Exchange system as claimed in claim 10, characterised in that in each input subsidiary switching network at least one connection line is connected for every external path.

12. Exchange system as claimed in one of the preceding claims, characterised in that each auxiliary subsidiary switching network (1HKa...16HKb) of each additional subsidiary switching network (TZK1a...ZK4d) has two control units which can substitute one another.

13. Exchange system as claimed in one of the preceding claims, characterised in that when the selected subscriber numbers are forwarded from the subsidiary switching network in question a change is made in the connection sections which lead in the direction of the target input subsidiary switching network in order to reach a different auxiliary swithing network or additional subsidiary switching network when the control unit operating in the previously reached subsidiary switching network declares itself overloaded with switching operations.

14. Exchange system as claimed in one of the preceding claims, characterised in that a connection path is always cut off with the aid of a control signal which is supplied by the control unit of an input subsidiary switching network and which is received by the control units of the other subsidiary switching networks participating in the connection path in which it is used for cutting off purposes.

15. Exchange system as claimed in one of the preceding claims, characterised in that the control units exchange control signals via connection paths which lead via subsidiary switching networks in permanently switched-through fashion.

**Revendications**

1. Système de commutation à commande indirecte, en particulier système de commutation téléphonique,
– avec un champ de couplage qui comporte au moins des genres de champs de couplage partiels suivants, qui sont respectivement pourvus de dispositifs de commande qui leur sont propres et qui sont en conséquence commandés individuellement:
– des champs de couplage d'entrée (par exemple 1TG1) auxquels sont reliées des lignes d'abonnés (T1...T64) et/ou des jonctions dans des positions locales de connexion données à l'avance,
– des champs de couplage auxiliaires (par exemple 1HKa), auxquels est relié un grand nombre de champs de couplage partiels d'entrée et par l'intermédiaire desquels ces derniers sont susceptibles d'être reliés entre eux,
– ainsi qu'avec des dispositifs pour convertir un numéro appelé en la position locale de connexion correspondante d'un champ de couplage partiel d'entrée, caractérisé par le fait,
– que le dispositif de réglage (par exemple 1E1) de chaque champ de couplage partiel d'entrée (par exemple 1TG1) comporte des moyens pour convertir ceux des numéros d'appel qui correspondent aux positions locales de connexion des lignes d'abonnés (T1–T64) reliées à ce champ de couplage partiel d'entrée (1TG1), de telle façon que des liaisons, dont l'origine (par exemple T1) et dont la destination (par exemple T64) sont reliées à un seul et même champ de couplage partiel d'entrée (1TG1), sont établies automatiquement par le dispositif de commande (1S1) de ce champ de couplage partiel d'entrée, alors que les autres numéros d'appel sont communiqués au dispositif de commande (par exemple 1Sa) d'un champ de couplage partiel auxiliaire (par exemple 1HKa),

– que le dispositif de commande (par exemple 1Sa) de chacun des champs de couplage partiels auxiliaires (par exemple 1HKa) comporte des moyens à l'aide desquels les numéros d'appel qui lui sont communiqués par l'un des champs de couplage partiels d'entrée (par exemple 1TG1), reliés au champ de couplage partiel auxiliaire (1HKa), sont transmis à tous les autres champs de couplage partiels d'entrée (par exemple 1TG32) reliés à ce champ de couplage partiel auxiliaire (1HKa), la transmission des numéros d'appel ayant lieu du champ de couplage concerné (par exemple 1TG1) au champ de couplage partiel auxiliaire (1HKa) par l'intermédiaire de la section de la voie de liaison occupée en premier et menant au champ de couplage partiel auxiliaire (1HKa),

– et que le dispositif de commande (1Sa) du champ de couplage partiel auxiliaire (1HKa) provoque, par l'intermédiaire de ce dernier (1HKa), l'établissement d'une liaison menant au champ de couplage partiel d'entrée (par exemple 1TG32) dont le dispositif de commande (1S32) signale la capacité de conversion du numéro d'appel en cause.

2. Système de commutation selon la revendication 1, dans lequel des champs de couplage partiels auxiliaires de la même espèce et les champs de couplage partiels d'entrée qui leur sont associés forment un groupe de champs de couplage partiels, plusieurs groupes de champs de couplage partiels de ce genre étant prévus, caractérisé par le fait,

– que les champs de couplage auxiliaires (1KHa–16HKb) de tous les groupes de champs de couplage partiels (I–XVI) sont susceptibles d'être reliés entre eux par l'intermédiaire de champs de couplage partiels supplémentaires (ZK1a–ZK4d) dont chacun possède un dispositif de commande propre S1a–S4d), qu'à partir d'une source (par exemple T1) reliée à un champ de couplage partiel d'entrée (1TG1) des numéros d'appel sélectionnés, dont la position locale de connexion associée n'appartient ni à ce champ de couplage partiel d'entrée (1TG1) ni à un autre champ de couplage partiel d'entrée du groupe de champs de couplage partiels (I), sont transmis par l'intermédiaire d'une section de voies de liaison occupée, en position d'attente, à un champ de couplage partiel supplémentaire (par exemple ZK1a),

– que le dispositif de commande (S1a) de ce champ de couplage partiel supplémentaire (ZK1a) transmet les numéros d'appel en cause, par l'intermédiaire des champs de couplage partiels auxiliaires des autres groupes de champs de couplage partiels (...XVI), aux champs de couplage partiels d'entrée de ce dernier (...16TG1... 16TG32) et provoque l'établissement d'une liaison qui passe par le champ de couplage partiel supplémentaire et qui mène au champ de couplage partiel d'entrée (par exemple 16TG1) présentant la position locale de connexion qui correspond au numéro d'appel sélectionné, et dont le dispositif de commande (16S1) signale en conséquence la capacité de conversion que possède le numéro d'appel sélectionné.

3. Système de commutation selon la revendication 2, caractérisé par le fait que les champs de couplage partiels supplémentaires (ZK1a–ZK1d) desdits groupes de champs de couplage partiels (I–XVI) sont en liaison avec d'autres champs de couplage supplémentaires (...ZK4a...ZK4d), qui sont reliés avec d'autres groupes de champs de couplage partiels, et que des numéros d'appel, qui ne correspondent à aucune position locale de connexion des groupes de champs de couplage partiels (I–XVI) mentionnés en premier lieu, sont offerts, par l'intermédiaire desdits autres champs de couplage partiels supplémentaires mentionnés (...ZK4a...ZK4b), aux champs de couplage partiels d'entrée des groupes de champs de couplage partiels qui sont reliés à ces derniers.

4. Système de commutation selon l'une des revendications antérieures, caractérisé par le fait que les lignes d'abonnés (T1...T64...T1985) sont branchées sur le champ de couplage selon un groupage à rebroussement.

5. Système de commutation selon la revendication 4, caractérisé par le fait que les lignes d'abonnés, les jeux de dispositifs de connexion et autres organes de commutation qui sont nécessaires par liaison, sont reliés, de la même façon, aux entrées de champs de couplage partiels d'entrée.

6. Système de commutation selon la revendication 5, caractérisé par le fait que les conducteurs intermédiaires qui relient les champs de couplage partiels sont reliés, pour chaque champ de couplage partiel, uniquement aux entrées associées, selon un groupage à rebroussement du point de vue du champ de couplage partiel, et les voies de liaison s'inversent, de ce fait, également dans les champs de couplage partiels.

7. Système de commutation selon l'une des revendications 4 à 6, caractérisé par le fait qu'entre deux champs de couplage partiels sont susceptibles d'être branchées respectivement plusieurs voies de liaison.

8. Système de commutation selon l'une des revendications 4 à 7, caractérisé par le fait qu'un champ de couplage partiel est formé par un coupleur à multiplexage spatial.

9. Système de commutation selon l'une des revendications 4 à 7, caractérisé par le fait qu'un champ de couplage partiel est constitué par un coupleur à canaux temporels.

10. Système de commutation selon l'une des revendications 4 à 9, caractérisé par le fait que des lignes de jonction (VI...V32) pour le trafic externe, sont reliées à des entrées des champs de couplage partiels d'entrée (1TG1...1TG32).

11. Système de commutation selon la revendication 10, caractérisé par le fait qu'au niveau de chacun des champs de couplage partiels d'entrée est reliée au moins une ligne de jonction pour chaque direction extérieure.

12. Système de commutation selon l'une des revendications antérieures, caractérisé par le fait que chaque champ de couplage partiel auxiliaire (1HKa...16HKb) et chaque champ de couplage partiel supplémentaire (ZK1a...ZK4d) comporte deux dispositifs de commande qui peuvent se remplacer mutuellement.

13. Système de commutation selon l'une des revendications antérieures, caractérisé par le fait que lors de la transmission de numéros d'appel, on procède à partir du champ de couplage partiel concerné, à un changement parmi les sections de liaison menant en direction du champ de couplage partiel d'entrée de la destination, en vue d'atteindre un autre champ de couplage partiel auxiliaire ou un champ de couplage partiel supplémentaire, lorsque le dispositif de commande opérant dans le champ de couplage partiel atteint précédemment, signale qu'il est surchargé par des opérations de commutation.

14. Système de commutation selon l'une des revendications antérieures, caractérisé par le fait qu'une voie de liaison est interrompue à l'aide d'un signal de commande fourni par le dispositif de commande d'un champ de couplage partiel d'entrée, signal de commande qui est reçu par les dispositifs de commande des autres champs de couplage partiels participant à la voie de liaison, et y est utilisé pour l'interruption.

15. Système de commutation selon l'une des revendications antérieures, caractérisé par le fait que les dispositifs de commande échangent des signaux de commande par l'intermédiaire de voies de liaison qui, connectés à demeure, passent par des champs de couplage partiels.